(19) Europäisches Patentamt / European Patent Office / Office européen des brevets

(11) **EP 1 816 560 B1**

(12) **FASCICULE DE BREVET EUROPEEN**

(45) Date de publication et mention
de la délivrance du brevet:
**10.08.2016 Bulletin 2016/32**

(51) Int Cl.:
***G06F 7/58*** *(2006.01)*

(21) Numéro de dépôt: **06026146.8**

(22) Date de dépôt: **18.12.2006**

(54) **Procédé et dispositif de génération d'un nombre aléatoire dans un périphérique USB**

Verfahren und Vorrichtung zur Erzeugung einer Zufallszahl in einer USB-Vorrichtung

Method and device for generating a random number in a USB peripheral device

(84) Etats contractants désignés:
**DE FR GB IT**

(30) Priorité: **12.01.2006 FR 0600251**

(43) Date de publication de la demande:
**08.08.2007 Bulletin 2007/32**

(73) Titulaires:
- **STMICROELECTRONICS SA
92120 Montrouge (FR)**
- **Gemalto SA
92190 Meudon (FR)**

(72) Inventeurs:
- **Pomet, Alain
13790 Rousset (FR)**

- **Duval, Benjamin
83470 Saint Maximin (FR)**
- **Leydier, Robert
83250 La Londe Les Maures (FR)**

(74) Mandataire: **Casalonga
Casalonga & Partners
Bayerstraße 71/73
80335 München (DE)**

(56) Documents cités:
**EP-A- 1 304 613     EP-A- 1 343 073
US-A- 6 061 702     US-A1- 2005 286 718**

EP 1 816 560 B1

**EP 1 816 560 B1**

**Description**

La présente invention concerne la génération de nombres aléatoires dans un circuit intégré.

La présente invention s'applique notamment, mais non exclusivement aux circuits intégrés de cartes à puce. Elle s'applique en particulier aux circuits intégrés équipés d'une interface de communication conforme au standard USB (Universal Serial Bus).

Les nombres aléatoires ou pseudo aléatoires sont utilisés par de nombreuses fonctions telles que les fonctions de cryptographie ou de protection contre les attaques notamment par injection d'erreur.

Il existe de nombreux procédés pour générer un nombre aléatoire. Ainsi, certains procédés utilisent un signal de bruit interne qui est échantillonné pour générer un aléa. Les signaux de bruit sont généralement de très faibles amplitudes. Il est donc nécessaire de les amplifier. Cette amplification introduit un facteur de corrélation, car l'amplificateur est également soumis aux mêmes conditions (mêmes technologie, tension d'alimentation, température, ...) que la source interne de bruit. Une telle corrélation rend le générateur d'aléa contrôlable de l'extérieur, et donc exploitable pour injecter des erreurs dans le circuit intégré s'il est utilisé dans une carte à puce.

Le brevet US 6 061 702 décrit un générateur de nombre aléatoires comprenant un oscillateur contrôlé en tension (VCO) recevant un signal de bruit et plusieurs oscillateurs différentiels dont les signaux de sortie sont échantillonnés sous le contrôle de l'oscillateur contrôlé en tension.

La demande de brevet EP 1 343 073 décrit un générateur de nombres aléatoires comprenant plusieurs oscillateurs fournissant un signal aléatoire, un nombre aléatoire étant généré à partir des signaux aléatoires lorsque les oscillateurs ont oscillé un nombre prédéterminé de fois.

La demande de brevet EP 1 304 613 décrit un générateur de nombres aléatoires comprenant deux registres à décalage, la sortie d'un premier des deux registres à décalage étant reliée au second registre à décalage par l'intermédiaire d'un circuit logique combinant un autre signal au signal de sortie du premier registre à décalage.

Dans la demande de brevet EP 1 143 616, un premier signal en dent de scie est échantillonné par un second signal. Les deux signaux sont asynchrones. L'amplitude de chaque échantillon est comparée à une tension de seuil, et le résultat de la comparaison fournit la valeur d'un bit d'un nombre pseudo aléatoire. Ce procédé de génération d'un nombre aléatoire nécessite la mise en oeuvre de deux sources de signaux. Le caractère aléatoire des nombres générés dépend en particulier du niveau de corrélation entre la source du signal en dent de scie et la source du signal d'échantillonnage. Or dans un circuit intégré, tel que ceux qui équipent les cartes à puce, il est difficile de réaliser des oscillateurs décorrélés, du fait que ces organes sont réalisés avec la même technologie et sont soumis aux mêmes conditions d'environnement (température, sons et lumières) et d'alimentation électrique (amplitude moyenne, niveau de perturbation en amplitudes et en fréquences). Dans les cartes à puce, l'utilisation d'une source externe de signaux n'est pas souhaitable car elle risque de compromettre la résistance de la puce aux attaques.

Ainsi, une idée de l'invention est d'exploiter le caractère aléatoire des glissements ou fluctuations de phase (jitter) qui apparaissent dans certaines transmissions de données numériques, et en particulier dans les signaux transmis par les liaisons séries telles que les liaisons de type USB. Ces fluctuations de phase présentent l'avantage d'être issues de la combinaison de plusieurs contributions non corrélées telles que celles de l'utilisateur, de l'application locale, de l'horloge locale, du partage du bus avec d'autres périphériques, de la fonction réalisée par la carte à puce, des générateurs de trafics et des durées de traitements). Ces fluctuations de phase sont difficilement contrôlables, et donc, leur utilisation par un générateur de nombres aléatoires accroît la résistance du circuit intégré aux attaques par injection d'erreur.

Plus particulièrement, l'invention prévoit un procédé de génération d'un nombre aléatoire comprenant des étapes de génération de plusieurs signaux d'oscillateur sensiblement de même fréquence moyenne et ayant des phases respectives distinctes, prélèvement d'un état de chacun des signaux d'oscillateur, et élaboration d'un nombre aléatoire à partir des états de chacun des signaux d'oscillateur. Selon l'invention, le procédé comprend une étape de réception d'un signal binaire de transmission de données présentant une fluctuation de phase, l'état de chacun des signaux d'oscillateur étant prélevé à l'apparition de fronts dans le signal binaire.

Selon un mode de réalisation de l'invention, un état de chacun des signaux d'oscillateur est prélevé à chaque front du signal binaire.

Selon un mode de réalisation de l'invention, la valeur du nombre aléatoire élaboré est fonction de la position du front du signal binaire par rapport aux fronts des signaux d'oscillateur.

Selon un mode de réalisation de l'invention, l'écart de phase moyen entre deux signaux d'oscillateur de phases consécutives est sensiblement constant.

Selon un mode de réalisation de l'invention, les signaux d'oscillateur ont une fréquence moyenne au moins quatre fois supérieure à celle du rythme de transmission de données du signal binaire de transmission de données.

Selon un mode de réalisation de l'invention, les signaux d'oscillateur sont au nombre de 8, et l'écart de phase moyen entre deux signaux d'oscillateur de phases consécutives est sensiblement égal à $\pi/4$.

Selon un mode de réalisation de l'invention, le signal binaire reçu est conforme à la norme USB.

L'invention concerne également un dispositif de génération d'un nombre aléatoire comprenant plusieurs entrées de signal d'oscillateur pour recevoir des signaux d'oscillateur ayant une fréquence moyenne sensiblement identique et des phases respectives distinctes, des circuits d'échantillonnage pour prélever un état de chacun des signaux d'oscillateur, et un circuit logique pour élaborer des bits d'un nombre aléatoire en fonction des états des signaux d'oscillateur. Selon l'invention, le dispositif comprend une entrée de signal binaire de transmission de données présentant une fluctuation de phase, et est configuré pour prélever l'état de chacun des signaux d'oscillateur à l'apparition de fronts du signal binaire.

Selon un mode de réalisation de l'invention, le dispositif comprend des moyens pour échantillonner les signaux d'horloge à chaque front du signal binaire.

Selon un mode de réalisation de l'invention, la valeur du nombre aléatoire élaboré par le circuit logique dépend de la position du front du signal binaire par rapport aux fronts des signaux d'oscillateur.

L'invention concerne également un circuit intégré comprenant :

- un circuit de réception d'un signal binaire,
- une unité de traitement de données connectée au circuit de réception, et
- un circuit de génération de signaux d'oscillateur connecté au circuit de réception.

Selon l'invention, le circuit intégré comprend un dispositif de génération de nombres aléatoires tel que défini ci-avant, fournissant des nombres aléatoires à l'unité de traitement, le dispositif de génération de nombres aléatoires étant connecté au circuit de génération de signaux d'horloge et au circuit de réception qui lui fournit le signal binaire reçu.

Selon un mode de réalisation de l'invention, le circuit de génération de signaux d'oscillateur comprend un oscillateur en anneau fournissant des signaux d'oscillateur sensiblement de même fréquence moyenne et de phases distinctes, au dispositif de génération de nombres aléatoires.

Selon un mode de réalisation de l'invention, le circuit de réception est conforme à la norme USB.

Ces objets, caractéristiques et avantages ainsi que d'autres de la présente invention seront exposés plus en détail dans la description suivante d'un mode de réalisation de l'invention, faite à titre non limitatif en relation avec les figures jointes parmi lesquelles :

- la figure 1 représente sous la forme de blocs un circuit intégré connecté à un ordinateur par l'intermédiaire de concentrateurs,
- la figure 2 représente un circuit de génération de signaux d'oscillateur du circuit intégré,
- la figure 3 illustre sous la forme de chronogrammes la forme de signaux d'oscillateur fournis par le circuit de génération de signaux d'oscillateur,
- la figure 4 représente un circuit de génération de nombres aléatoires selon l'invention,
- la figure 5 illustre sous la forme de chronogrammes le fonctionnement du circuit de génération de nombres aléatoires, et
- la figure 6 représente un circuit logique du circuit de génération de nombres aléatoires selon l'invention.

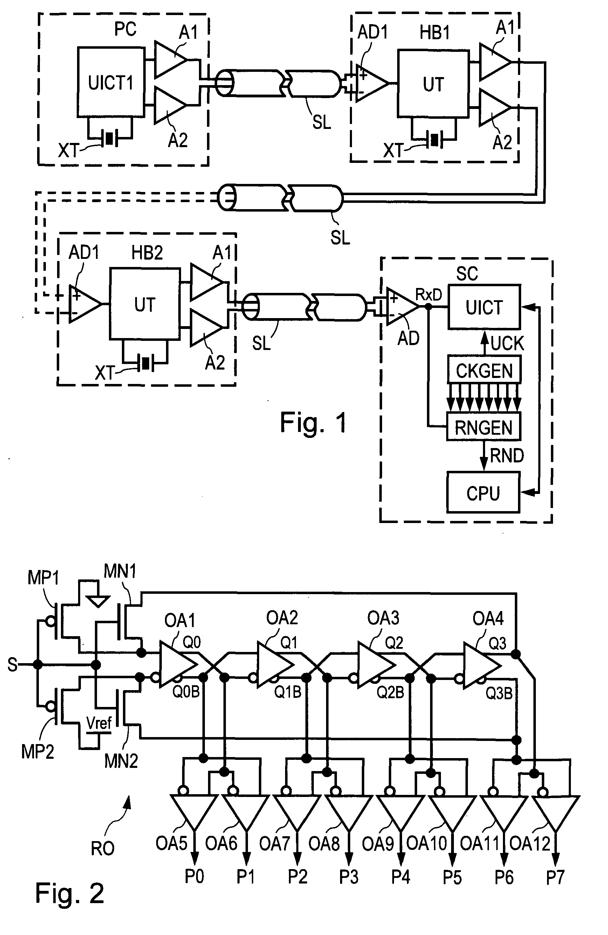

La figure 1 représente un circuit intégré SC connecté à un ordinateur PC par l'intermédiaire de concentrateurs (hubs) HB1, HB2 et de liaisons séries SL. L'ordinateur PC comprend une interface de liaison série UICT1 cadencée par un oscillateur XT et connecté à des amplificateurs d'émission A1, A2 pour émettre des données sur la liaison série SL.

Chaque concentrateur HB1, HB2 comprend un émetteur-récepteur UT cadencé par un oscillateur XT. L'émetteur-récepteur est connecté à la liaison série SL en réception par l'intermédiaire d'un amplificateur de réception AD1, et en émission, par l'intermédiaire d'amplificateurs d'émission A1, A2.

Le circuit intégré SC comprend une unité de traitement CPU, une interface de liaison série UICT connectée à la liaison série SL par l'intermédiaire d'un amplificateur de réception AD. Le circuit intégré comprend également un circuit de génération de signal d'horloge CKGEN fournissant un signal d'horloge UCK à l'interface UICT.

Selon l'invention, le circuit intégré comprend un circuit de génération de nombres aléatoires RNGEN connecté au circuit CKGEN et fournissant des nombres aléatoires RND à l'unité de traitement.

Par souci de clarté de la figure, seuls les amplificateurs utilisés pour les transmissions de données de l'ordinateur PC vers le circuit intégré SC ont été représentés.

La figure 2 représente un oscillateur RO du circuit de génération de signal d'horloge CKGEN. L'oscillateur RO, de type oscillateur en anneau, comprend plusieurs amplificateurs différentiels OA1-OA4 interconnectés en anneau (4 oscillateurs dans l'exemple de la figure), deux transistors de type PMOS MP1, MP2, et deux transistors de type NMOS MN1, MN2. L'oscillateur RO comprend également plusieurs amplificateurs OA5-OA12 fournissant chacun un signal d'oscillateur P0-P7.

Chacun des amplificateurs OA1-OA4 fournit deux signaux en opposition de phase Qi, QiB (i étant un nombre entier compris entre 0 et 3). Les grilles des transistors MP1, MP2, MN1, MN2 reçoivent un signal de démarrage S de l'oscillateur RO. Le drain du transistor MP1 est connecté à la masse, et la source de ce transistor est connectée à l'entrée directe de l'amplificateur OA1. La source du transistor MP2 reçoit une tension de référence Vref, et le drain de ce transistor est connecté à l'entrée inversée de l'amplificateur OA1. La source du transistor MN1 est connectée à l'entrée directe de l'amplificateur OA1, et le drain de ce transistor est connecté à la sortie Q3 de l'amplificateur OA4. La source du transistor MN2 est connectée à l'entrée inversée de l'amplificateur OA1, et le drain de ce transistor est connecté à la sortie Q3B de l'amplificateur OA4. La sortie Q0 de l'amplificateur OA1 est connectée à l'entrée directe de l'amplificateur OA5 et à l'entrée inversée de l'amplificateur OA6. La sortie Q0B de l'amplificateur OA1 est connectée à l'entrée inversée de l'amplificateur OA5 et à l'entrée directe de l'amplificateur OA6. La sortie Q1 de l'amplificateur OA2 est connectée à l'entrée directe de l'amplificateur OA7 et à l'entrée inversée de l'amplificateur OA8. La sortie Q1B de l'amplificateur OA2 est connectée à l'entrée inversée de l'amplificateur OA7 et à l'entrée directe de l'amplificateur OA8. La sortie Q2 de l'amplificateur OA3 est connectée à l'entrée directe de l'amplificateur OA9 et à l'entrée inversée de l'amplificateur OA10. La sortie Q2B de l'amplificateur OA3 est connectée à l'entrée inversée de l'amplificateur OA9 et à l'entrée directe de l'amplificateur OA10. La sortie Q3 de l'amplificateur OA4 est connectée à l'entrée directe de l'amplificateur OA11 et à l'entrée inversée de l'amplificateur OA12. La sortie Q3B de l'amplificateur OA4 est connectée à l'entrée inversée de l'amplificateur OA11 et à l'entrée directe de l'amplificateur OA12.

Lorsque le signal de démarrage S est inactif. Les sorties Q3 et Q3B ne sont pas connectées aux entrées de l'amplificateur OA1 et ces entrées sont polarisées respectivement à la masse et Vref par les transistors MP1 et MP2. Lorsque le signal de démarrage S est actif, les sorties Q3 et Q3B sont connectées aux entrées de OA1 qui sont isolées de la masse et de la tension Vref. Il se produit alors une oscillation.

Les signaux d'oscillateur P0-P7 en sortie des amplificateurs OA5-OA12 ont une même période moyenne et sont décalés d'une durée moyenne $\Delta\varphi$ d'un huitième de période.

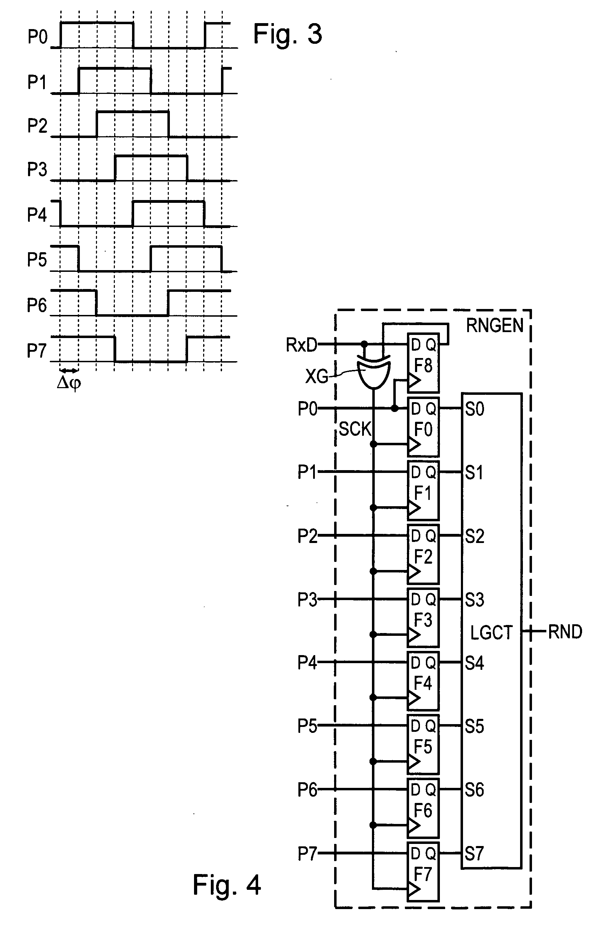

La figure 3 représente la forme des signaux d'oscillateur P0-P7. Sur cette figure, les signaux P0-P7 sont déphasés les uns par rapport aux autres. Ainsi, deux signaux de phases consécutives Pi, Pi+1 (i étant un nombre entier compris entre 0 et 6) sont déphasés d'un écart de phase moyen $\Delta\varphi$ sensiblement égal à $2\pi/n$, n étant le nombre de signaux P0-P7 générés. Dans l'exemple de la figure 3, les signaux d'oscillateur P0-P7 sont au nombre de 8 et l'écart de phase moyen $\Delta\varphi$ est égal à $\pi/4$.

La figure 4 représente le circuit RNGEN de génération d'un nombre aléatoire. Le circuit RNGEN comprend des entrées pour recevoir les signaux d'oscillateur P0-P7, et une entrée de signal pour recevoir le signal RxD. Le circuit RNGEN comprend une bascule (Flip-Flop) F8 et une porte logique XG de type OU EXCLUSIF. Le signal RxD en sortie de l'amplificateur AD est appliqué à une entrée D de la bascule F8 et à une entrée de la porte XG. Le signal P0 est appliqué à l'entrée d'horloge de la bascule F8. La sortie Q de la bascule F8 est connectée à une autre entrée de la porte XG dont la sortie fournit un signal SCK.

Le circuit RNGEN comprend des bascules (Flip-Flop) F0-F7 dont le nombre correspond à celui des signaux d'oscillateur P0-P7. Chaque bascule reçoit sur son entrée D l'un des signaux P0-P7 et sur son entrée d'horloge le signal SCK en sortie de la porte XG. La sortie Q de chaque bascule F0-F7 fournit un signal S0-S7 qui est appliqué à une entrée d'un circuit logique LGCT. Le circuit LGCT fournit en sortie un nombre binaire aléatoire RND.

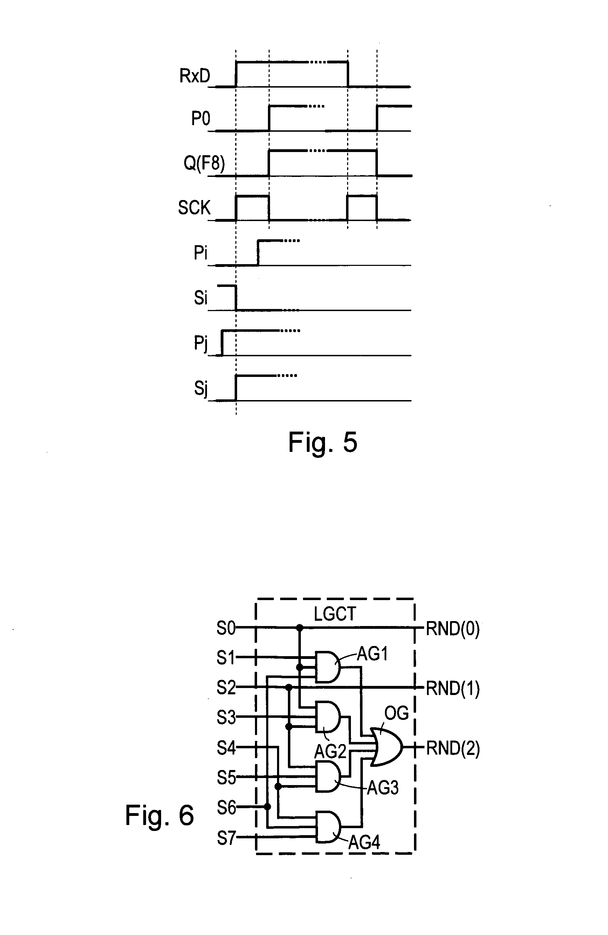

Pour illustrer le fonctionnement du circuit RNGEN, la figure 5 représente la forme des signaux RxD, P0 et SCK, ainsi que la forme du signal Q(F8) à la sortie Q de la bascule F8.

Lorsque le signal Q(F8) est à 0, le signal P0 est à 0, et le signal RxD est à 1. Lorsque le signal RxD passe à 1, la sortie Q(F8) reste à 0 et le signal SCK en sortie de la porte XG passe à 1. Lorsque dans cet état, le signal P0 passe à 1, la sortie Q(F8) passe à 1 et le signal SCK passe à 0.

Lorsque le signal Q(F8) est à 1, le signal P0 est à 0 et le signal RXD est à 1. Lorsque dans cet état, le signal RXD passe à 0, la sortie Q(F8) reste à 1 et le signal SCK en sortie de la porte XG passe à 1. Lorsque le signal P0 passe à 1, la sortie Q(F8) passe à 0 et le signal SCK en sortie de la porte XG passe à 0.

Le signal SCK en sortie de la porte XG comporte donc un front montant, c'est-à-dire passe à 1, à chaque front montant et descendant du signal RxD. Le signal SCK comporte un front descendant, c'est-à-dire passe à 0, à chaque front montant du signal P0.

Le signal de sortie Si (S0-S7) de chaque bascule Fi (F0-F7) passe à 0 à un front montant du signal SCK si le signal Pi (P0-P7) appliqué en entrée de la bascule est à 0. Inversement, le signal de sortie Sj (S0-S7) de chaque bascule Fj (F0-F7) passe à 1 à un front montant du signal SCK si le signal Pj (P0-P7) appliqué en entrée de la bascule est à 1.

De cette manière, chaque bascule F0-F7 prélève l'état du signal P0-P7 appliqué sur son entrée à chaque front du signal RxD.

La figure 6 représente un exemple de circuit logique LGCT permettant d'élaborer un nombre aléatoire RND en fonction des signaux appliqués aux entrées S0-S7 de ce circuit par les bascules F0-F7. Le circuit LGCT fournit un nombre aléatoire RND sur 3 bits RND(0), RND(1) et RND(2), à chaque front montant du signal SCK, c'est-à-dire à chaque front du signal RxD. La valeur du nombre RND dépend de la position de ce front par rapport aux fronts montants des signaux d'oscillateur P0-P7. A cet effet, le circuit LGCT comprend quatre portes logiques AG1, AG2, AG3, AG4 à trois entrées de type ET, et une porte logique à 4 entrées de type OU.

La sortie RND(0) est connectée à l'entrée S0 du circuit LGCT. La sortie RND(1) est connectée à l'entrée S2.

Les entrées de la porte AG1 sont connectées aux entrées S0, S1 et S6. Les entrées de la porte AG2 sont connectées aux entrées S0, S2 et S3. Les entrées de la porte AG3 sont connectées aux entrées S2, S4 et S5. Les entrées de la porte AG4 sont connectées aux entrées S4, S6 et S7. Chacune des sorties des portes AG1 à AG4 est connectée à une entrée de la porte OG dont la sortie est connectée à la sortie RND(2) du circuit LGCT.

Ainsi, le circuit LGCT met en oeuvre les équations suivantes :

$$RND(0) = S0 \tag{1}$$

$$RND(1) = S2 \tag{2}$$

$$RND(2) = S0.S1.S6 + S0.S2.S3 + S2.S4.S5 + S4.S6.S7 \tag{3}$$

dans lesquelles "." représente l'opérateur ET, et "+" représente l'opérateur OU.

Le tableau suivant résume les valeurs du nombre RND obtenues en sortie du circuit RNGEN, et des signaux S0-S7 appliqués aux entrées du circuit LGCT, en fonction des fronts montants des signaux d'oscillateur P0-P7 entre lesquels est situé le front du signal RxD :

Tableau 1

|  | S0 | S1 | S2 | S3 | S4 | S5 | S6 | S7 | RND |
|---|---|---|---|---|---|---|---|---|---|
| P0/P1 | 1 | 0 | 0 | 0 | 0 | 1 | 1 | 1 | 001 |
| P1/P2 | 1 | 1 | 0 | 0 | 0 | 0 | 1 | 1 | 101 |
| P2/P3 | 1 | 1 | 1 | 0 | 0 | 0 | 0 | 1 | 011 |
| P3/P4 | 1 | 1 | 1 | 1 | 0 | 0 | 0 | 0 | 111 |
| P4/P5 | 0 | 1 | 1 | 1 | 1 | 0 | 0 | 0 | 010 |
| P5/P6 | 0 | 0 | 1 | 1 | 1 | 1 | 0 | 0 | 110 |
| P6/P7 | 0 | 0 | 0 | 1 | 1 | 1 | 1 | 0 | 000 |
| P7/P0 | 0 | 0 | 0 | 0 | 1 | 1 | 1 | 1 | 100 |

Le tableau 1 montre que chaque position possible d'un front du signal RxD par rapport aux fronts montants des signaux d'oscillateur P0-P7 correspond à une valeur distincte du nombre RND.

Bien entendu, tout autre circuit de logique combinatoire peut être envisagé pour produire les nombres RND à partir des signaux S0 à S7. Il suffit que le circuit produise une valeur différente du nombre RND pour chaque position possible d'un front du signal RxD par rapport aux fronts montants des signaux d'oscillateur P0-P7.

Le circuit RNGEN qui vient d'être décrit s'applique plus particulièrement à une liaison série de type USB (Universal Serial Bus). Selon les spécifications USB, les données sont transmises sur la liaison SL avec un débit de 1,5 Mbit/s en basse vitesse (low speed), 12 Mbit/s en pleine vitesse (full speed) et 480 Mbit/s en vitesse haute (high speed). Chaque émetteur de données sur la liaison SL comprend donc deux amplificateurs A1, A2. Chaque récepteur comprend un amplificateur différentiel AD, AD1. Selon le nombre de concentrateurs ou répéteurs intermédiaires entre un émetteur et un récepteur final, un glissement ou une fluctuation de phase (jitter) plus ou moins importante peut apparaître, chaque émetteur-récepteur ajoutant une fluctuation de phase aux fluctuations de phase introduites par les émetteurs-récepteurs situés en amont sur la liaison série. Selon les spécifications USB, ce glissement de phase doit rester inférieur à +/-18,5 ns pour une application en pleine vitesse (full speed), avec un nombre maximum autorisé de cinq concentrateurs ou répéteurs intermédiaires. Chaque émetteur-récepteur interposé dans la liaison série introduit une fluctuation de phase qui dépend de facteurs tels que la stabilité de la tension d'alimentation, le bruit environnant, la température, et la technologie avec laquelle il est réalisé.

Le circuit RNGEN permet ainsi d'échantillonner la fluctuation de phase qui apparaît dans le signal RxD reçu. Cet échantillonnage est effectué en exploitant les signaux d'oscillateur déphasés produits par l'oscillateur en anneau qui est utilisé par l'interface de communication UICT. La fréquence moyenne du signal circulant dans l'oscillateur en anneau RO est d'une manière classique comprise entre 50 et 100 MHz, soit 4 à 8 fois celle du signal reçu RxD dans le cas d'une transmission Full Speed. Si l'oscillateur en anneau fournit huit signaux P0-P7 déphasés, l'écart de phase entre deux signaux de phases consécutives Pi et Pi+1 (i étant un nombre entier compris entre 0 et 6) est compris entre 1,25 et 2,5 ns. Si les huit signaux sont utilisés pour échantillonner la fluctuation de phase, cela revient à appliquer une période d'échantillonnage équivalente de 1,25 à 2,5 ns. Cette période d'échantillonnage est parfaitement adaptée pour échantillonner une fluctuation de phase typiquement comprise entre -10 et +10 ns. Le nombre RND résultant de cet échantillonnage présente un caractère aléatoire important pour les raisons suivantes.

La fluctuation de phase qui se produit dans la liaison série USB est avantageusement une source externe de bruit, qui résulte d'une combinaison de plusieurs sources primaires indépendantes de bruit situées dans l'ordinateur PC et dans d'éventuels concentrateurs HB1, HB2 ou répéteurs. Comme les sources primaires de bruit dépendent d'un grand nombre de facteurs, elles sont très difficiles à contrôler. Au contraire des solutions de l'art antérieur qui font appel à une faible source interne de bruit, la fluctuation de phase utilisée dans l'invention comme source de bruit n'a pas besoin d'être amplifiée.

Par ailleurs, le circuit RNGEN permet d'obtenir un flux relativement important d'aléas : 3 bits à chaque front du signal RxD, c'est-à-dire 3 bits à une fréquence de 12 MHz. Il est facile d'augmenter ce flux, en augmentant le nombre d'amplificateurs OA dans l'oscillateur en anneau RO, ou bien en augmentant la fréquence moyenne du signal qui se propage dans l'oscillateur en anneau.

Il est à noter que l'invention exploite la présence d'un oscillateur en anneau dans les circuits intégrés équipés d'une interface de communication série de type USB. Un tel oscillateur en anneau fournit plusieurs signaux sensiblement de même fréquence moyenne, déphasés les uns par rapport aux autres d'un écart de phase moyen sensiblement constant. Ces signaux sont logiquement combinés avec le signal reçu par l'interface de communication, et les signaux obtenus par ces combinaisons logiques sont exploités pour générer des nombres aléatoires.

Il apparaîtra clairement à l'homme de l'art que l'invention est susceptible de diverses variantes et applications. Ainsi, il n'est pas indispensable d'échantillonner les signaux P0-P7 à chaque front du signal reçu RxD. L'échantillonnage peut être effectué uniquement à chaque front montant ou descendant du signal reçu. Pour cela, il suffit d'appliquer le signal RxD directement à l'entrée de signal d'horloge des bascules F0-F7. Le flux de nombres aléatoires générés sera alors plus faible.

Il n'est pas non plus nécessaire que l'écart de phase entre les signaux d'oscillateur soit sensiblement constant. Cette caractéristique provient de l'exploitation d'un oscillateur en anneau. L'absence de cette caractéristique introduit simplement un biais dans le caractère aléatoire des nombres RND générés.

L'invention ne s'applique pas uniquement aux liaisons de type USB. Elle s'applique à toute liaison de transmission de données dans laquelle des fluctuations de phase peuvent apparaître. L'invention ne s'applique pas non plus exclusivement aux circuits intégrés utilisés dans les cartes à puce. Elle s'applique plus généralement à tout dispositif équipé d'une interface de communication devant générer des nombres aléatoires.

## Revendications

1. Procédé de génération d'un nombre aléatoire, comprenant des étapes de :

   - génération de plusieurs signaux d'oscillateur (P0-P7) sensiblement de même fréquence moyenne et ayant des phases respectives distinctes,
   - prélèvement d'un état (S0-S7) de chacun des signaux d'oscillateur, et
   - élaboration d'un nombre aléatoire (RND) à partir des états de chacun des signaux d'oscillateur,

   **caractérisé en ce qu'**il comprend une étape de réception d'un signal binaire (RxD) de transmission de données présentant une fluctuation de phase, l'état (S0-S7) de chacun des signaux d'oscillateur (P0-P7) étant prélevé à l'apparition de fronts dans le signal binaire (RxD).

2. Procédé selon la revendication 1, dans lequel un état de chacun des signaux d'oscillateur (P0-P7) est prélevé à chaque front du signal binaire (RxD).

3. Procédé selon la revendication 1 ou 2, dans lequel la valeur du nombre aléatoire élaboré (RND) est fonction de la position du front du signal binaire (RxD) par rapport aux fronts des signaux d'oscillateur (P0-P7).

4. Procédé selon l'une des revendications 1 à 3, dans lequel l'écart de phase moyen ($\Delta\varphi$) entre deux signaux d'oscillateur (P0-P7) de phases consécutives est sensiblement constant.

5. Procédé selon l'une des revendications 1 à 4, dans lequel les signaux d'oscillateur (P0-P7) ont une fréquence moyenne au moins quatre fois supérieure à celle du rythme de transmission de données du signal binaire de transmission de données (RxD).

6. Procédé selon l'une des revendications 1 à 5, dans lequel les signaux d'oscillateur (P0-P7) sont au nombre de 8, et l'écart de phase moyen ($\Delta\varphi$) entre deux signaux d'oscillateur (P0-P8) de phases consécutives est sensiblement égal à $\pi/4$.

7. Procédé selon l'une des revendications 1 à 6, dans lequel le signal binaire reçu (RxD) est conforme à la norme USB.

8. Dispositif de génération d'un nombre aléatoire (RNGEN), comprenant :

   - plusieurs entrées de signal d'oscillateur pour recevoir des signaux d'oscillateur (P0-P7) ayant une fréquence moyenne sensiblement identique et des phases respectives distinctes,
   - des circuits d'échantillonnage (F0-F7) pour prélever un état (S0-S7) de chacun des signaux d'oscillateur, et
   - un circuit logique (LGCT) pour élaborer des bits d'un nombre aléatoire (RND) en fonction des états des signaux d'oscillateur,

   **caractérisé en ce qu'**il comprend une entrée de signal binaire de transmission de données (RxD) présentant une fluctuation de phase, et est configuré pour prélever l'état (S1-S7) de chacun des signaux d'oscillateur (P0-P7) à l'apparition de fronts du signal binaire (RxD).

9. Dispositif selon la revendication 8, comprenant des moyens (F8, XG) pour échantillonner les signaux d'horloge (P0-P7) à chaque front du signal binaire (RxD).

10. Dispositif selon la revendication 8 ou 9, dans lequel la valeur du nombre aléatoire (RND) élaboré par le circuit logique (LGCT) dépend de la position du front du signal binaire (RxD) par rapport aux fronts des signaux d'oscillateur (P0-P7).

11. Dispositif selon l'une des revendications 8 à 10, dans lequel l'écart de phase moyen ($\Delta\varphi$) entre deux signaux d'oscillateur (P0-P8) de phases consécutives est sensiblement constant.

12. Dispositif selon l'une des revendications 8 à 11, dans lequel les signaux d'oscillateur (P0-P7) ont une fréquence moyenne au moins quatre fois supérieure à celle du rythme de transmission de données du signal binaire de transmission de données (RxD).

13. Dispositif selon l'une des revendications 8 à 12, dans lequel les signaux d'horloge sont au nombre de 8, et l'écart de phase moyen ($\Delta\varphi$) entre deux signaux d'horloge (P0-P8) de phases consécutives est sensiblement égal à $\pi/4$.

14. Dispositif selon l'une des revendications 8 à 13, dans lequel le signal binaire (RxD) est conforme à la norme USB.

15. Circuit intégré comprenant :

   - un circuit de réception (UICT) d'un signal binaire (RXD),
   - une unité de traitement de données (CPU) connectée au circuit de réception, et
   - un circuit (CKGEN) de génération de signaux d'oscillateur (P0-P7) connecté au circuit de réception,

   **caractérisé en ce qu'**il comprend un dispositif de génération de nombres aléatoires (RNGEN) selon l'une des revendications 8 à 14, fournissant des nombres aléatoires à l'unité de traitement (CPU), le dispositif de génération de nombres aléatoires étant connecté au circuit de génération de signaux d'horloge (CKGEN) et au circuit de réception (UICT) qui lui fournit le signal binaire reçu (RxD).

16. Circuit intégré selon la revendication 15, dans lequel le circuit de génération de signaux d'oscillateur (CKGEN) comprend un oscillateur en anneau (RO) fournissant des signaux d'oscillateur (P0-P7) sensiblement de même fréquence moyenne et de phases distinctes, au dispositif de génération de nombres aléatoires (RNGEN).

17. Circuit intégré selon la revendication 15 ou 16, dans lequel le circuit de réception (UICT) est conforme à la norme USB.

**Patentansprüche**

1. Verfahren zur Generierung einer Zufallszahl, das Schritte enthält:

   - der Generierung mehrerer Oszillatorsignale (P0-P7) mit im Wesentlichen gleicher Mittelfrequenz und mit unterschiedlichen Phasen,
   - der Entnahme eines Zustands (S0-S7) jedes der Oszillatorsignale, und
   - der Erzeugung einer Zufallszahl (RND) ausgehend von den Zuständen jedes der Oszillatorsignale,

   **dadurch gekennzeichnet, dass** es einen Schritt des Empfangs eines eine Phasenschwankung aufweisenden binären Datenübertragungssignals (RxD) enthält, wobei der Zustand (S0-S7) jedes der Oszillatorsignale (P0-P7) beim Auftreten von Flanken im Binärsignal (RxD) entnommen wird.

2. Verfahren nach Anspruch 1, wobei ein Zustand jedes der Oszillatorsignale (P0-P7) bei jeder Flanke des Binärsignals (RxD) entnommen wird.

3. Verfahren nach Anspruch 1 oder 2, wobei der Wert der erzeugten Zufallszahl (RND) von der Stellung der Flanke des Binärsignals (RxD) bezüglich der Flanken der Oszillatorsignale (P0-P7) abhängt.

4. Verfahren nach einem der Ansprüche 1 bis 3, wobei die mittlere Phasenabweichung ($\Delta\varphi$) zwischen zwei Oszillatorsignalen (P0-P7) aufeinanderfolgender Phasen im Wesentlichen konstant ist.

5. Verfahren nach einem der Ansprüche 1 bis 4, wobei die Oszillatorsignale (P0-P7) eine Mittelfrequenz mindestens viermal höher als diejenige des Datenübertragungstakts des binären Datenübertragungssignals (RxD) haben.

6. Verfahren nach einem der Ansprüche 1 bis 5, wobei es 8 Oszillatorsignale (P0-P7) gibt, und die mittlere Phasenabweichung ($\Delta\varphi$) zwischen zwei Oszillatorsignalen (P0-P8) aufeinanderfolgender Phasen im Wesentlichen gleich $\pi/4$ ist.

7. Verfahren nach einem der Ansprüche 1 bis 6, wobei das empfangene Binärsignal (RxD) der USB-Norm entspricht.

8. Vorrichtung zur Generierung einer Zufallszahl (RNGEN), die enthält:

   - mehrere Oszillatorsignaleingänge für den Empfang von Oszillatorsignalen (P0-P7) mit einer im Wesentlichen gleichen Mittelfrequenz und unterschiedlichen Phasen,
   - Abtastschaltungen (F0-F7), um einen Zustand (S0-S7) jedes der Oszillatorsignale zu entnehmen, und
   - eine Logikschaltung (LGCT), um Bits einer Zufallszahl (RND) abhängig von den Zuständen der Oszillatorsignale zu erzeugen,

   **dadurch gekennzeichnet, dass** sie einen Eingang eines eine Phasenschwankung aufweisenden binären Datenübertragungssignals (RxD) enthält und konfiguriert ist, den Zustand (S1-S7) jedes der Oszillatorsignale (P0-P7) beim Auftreten von Flanken des Binärsignals (RxD) zu entnehmen.

9. Vorrichtung nach Anspruch 8, die Einrichtungen (F8, XG) enthält, um die Taktsignale (P0-P7) bei jeder Flanke des Binärsignals (RxD) abzutasten.

10. Vorrichtung nach Anspruch 8 oder 9, wobei der Wert der von der Logikschaltung (LGCT) erzeugten Zufallszahl (RND) von der Stellung der Flanke des Binärsignals (RxD) bezüglich der Flanken der Oszillatorsignale (P0-P7) abhängt.

11. Vorrichtung nach einem der Ansprüche 8 bis 10, wobei die mittlere Phasenabweichung ($\Delta\varphi$) zwischen zwei Oszillatorsignalen (P0-P8) aufeinanderfolgender Phasen im Wesentlichen konstant ist.

12. Vorrichtung nach einem der Ansprüche 8 bis 11, wobei die Oszillatorsignale (P0-P7) eine Mittelfrequenz mindestens viermal höher als diejenige des Datenübertragungstakts des binären Datenübertragungssignals (RxD) haben.

13. Vorrichtung nach einem der Ansprüche 8 bis 12, wobei es 8 Taktsignale gibt, und die mittlere Phasenabweichung ($\Delta\varphi$) zwischen zwei Taktsignalen (P0-P8) aufeinanderfolgender Phasen im Wesentlichen gleich $\pi/4$ ist.

**14.** Vorrichtung nach einem der Ansprüche 8 bis 13, wobei das Binärsignal (RxD) der USB-Norm entspricht.

**15.** Integrierte Schaltung, die enthält:

   - eine Empfangsschaltung (UICT) eines Binärsignals (RxD),
   - eine Datenverarbeitungseinheit (CPU), die mit der Empfangsschaltung verbunden ist, und
   - eine Schaltung (CKGEN) zur Generierung von Oszillatorsignalen (P0-P7), die mit der Empfangsschaltung verbunden ist,

   **dadurch gekennzeichnet, dass** sie eine Vorrichtung zur Generierung von Zufallszahlen (RNGEN) nach einem der Ansprüche 8 bis 14 enthält, die Zufallszahlen an die Verarbeitungseinheit (CPU) liefert, wobei die Vorrichtung zur Generierung von Zufallszahlen mit der Schaltung zur Generierung von Taktsignalen (CKGEN) und mit der Empfangsschaltung (UICT) verbunden ist, die ihr das empfangene Binärsignal (RxD) liefert.

**16.** Integrierte Schaltung nach Anspruch 15, wobei die Schaltung zur Generierung von Oszillatorsignalen (CKGEN) einen Ringoszillator (RO) enthält, der Oszillatorsignale (P0-P7) mit im Wesentlichen gleicher Mittelfrequenz und unterschiedlichen Phasen an die Vorrichtung zur Generierung von Zufallszahlen (RNGEN) liefert.

**17.** Integrierte Schaltung nach Anspruch 15 oder 16, wobei die Empfangsschaltung (UICT) der USB-Norm entspricht.


**Claims**

**1.** Method for generating a random number, comprising steps of:

   - generating a plurality of oscillator signals (P0-P7) substantially of the same mean frequency and having distinct respective phases,
   - sampling a state (S0-S7) of each of the oscillator signals, and
   - producing a random number (RND) from the states of each of the oscillator signals,

   **characterized in that** it comprises a step of receiving a binary data transmission signal (RxD) exhibiting a phase fluctuation, the state (S0-S7) of each of the oscillator signals (P0-P7) being sampled on the appearance of fronts in the binary signal (RxD).

**2.** Method according to Claim 1, wherein a state of each of the oscillator signals (P0-P7) is collected at each front of the binary signal (RxD).

**3.** Method according to Claim 1 or 2, wherein the value of the produced random number (RND) depends on the position of the front of the binary signal (RxD) relative to the fronts of the oscillator signals (P0-P7) .

**4.** Method according to one of Claims 1 to 3, wherein the mean phase deviation ($\Delta\varphi$) between two oscillator signals (P0-P7) of consecutive phases is substantially constant.

**5.** Method according to one of Claims 1 to 4, wherein the oscillator signals (P0-P7) have a mean frequency at least four times higher than that of the data transmission rhythm of the binary data transmission signal (RxD).

**6.** Method according to one of Claims 1 to 5, wherein the oscillator signals (P0-P7) are 8 in number, and the mean phase deviation ($\Delta\varphi$) between two oscillator signals (P0-P8) of consecutive phases is substantially equal to n/4.

**7.** Method according to one of Claims 1 to 6, wherein the received binary signal (RxD) conforms with the USB standard.

**8.** Device (RNGEN) for generating a random number, comprising:

   - a plurality of oscillator signal inputs for receiving oscillator signals (P0-P7) having a substantially identical mean frequency and distinct respective phases,
   - sampling circuits (F0-F7) for sampling a state (S0-S7) of each of the oscillator signals, and
   - a logic circuit (LGCT) for producing bits of a random number (RND) depending on the states of the oscillator signals,

**characterized in that** it comprises an input for a binary data transmission signal (RxD) exhibiting a phase fluctuation, and is configured to collect the state (S1-S7) of each of the oscillator signals (P0-P7) on the appearance of fronts of the binary signal (RxD).

9. Device according to Claim 8, comprising means (F8, XG) for sampling the clock signals (P0-P7) at each front of the binary signal (RxD).

10. Device according to Claim 8 or 9, wherein the value of the random number (RND) produced by the logic circuit (LGCT) depends on the position of the front of the binary signal (RxD) relative to the fronts of the oscillator signals (P0-P7).

11. Device according to one of Claims 8 to 10, wherein the mean phase deviation ($\Delta\varphi$) between two oscillator signals (P0-P8) of consecutive phases is substantially constant.

12. Device according to one of Claims 8 to 11, wherein the oscillator signals (P0-P7) have a mean frequency at least four times higher than that of the data transmission rhythm of the binary data transmission signal (RxD).

13. Device according to one of Claims 8 to 12, wherein the clock signals are 8 in number, and the mean phase deviation ($\Delta\varphi$) between two clock signals (P0-P8) of consecutive phases is substantially equal to $\pi/4$.

14. Device according to one of Claims 8 to 13, wherein the binary signal (RxD) conforms with the USB standard.

15. Integrated circuit comprising:

       - a circuit (UICT) for receiving a binary signal (RxD),
       - a data processing unit (CPU) connected to the receiving circuit, and
       - a circuit (CKGEN) for generating oscillator signals (P0-P7), which circuit is connected to the receiving circuit,

**characterized in that** it comprises a device (RNGEN) for generating random numbers according to one of Claims 8 to 14, delivering random numbers to the processing unit (CPU), the device for generating random numbers being connected to the circuit (CKGEN) for generating clock signals and to the receiving circuit (UICT), which delivers the received binary signal (RxD) thereto.

16. Integrated circuit according to Claim 15, wherein the circuit (CKGEN) for generating oscillator signals comprises a ring oscillator (RO) delivering oscillator signals (P0-P7) substantially of the same mean frequency and of distinct phases to the device (RNGEN) for generating random numbers.

17. Integrated circuit according to Claim 15 or 16, wherein the receiving circuit (UICT) conforms with the USB standard.

Fig. 1

Fig. 2

Fig. 3

Fig. 4

Fig. 5

Fig. 6

**EP 1 816 560 B1**

## RÉFÉRENCES CITÉES DANS LA DESCRIPTION

**Documents brevets cités dans la description**

- US 6061702 A
- EP 1343073 A
- EP 1304613 A
- EP 1143616 A